# EUROPEAN PATENT APPLICATION

(11) **EP 3 171 315 A1**
(43) Date of publication of application: **24.05.2017**
(21) Application number: 16184940.1
(22) Date of filing: 19.08.2016
(51) Int. Cl.: G06Q 20/32

(54) **PAYMENT VERIFICATION SYSTEM, METHOD AND APPARATUS, COMPUTER PROGRAM AND RECORDING MEDIUM**

(30) Priority: 23.11.2015 CN 201510818893
(71) Applicant: Xiaomi Inc., Beijing 100085 (CN)
(72) Inventor: HU, Yang, BEIJING, 100085 (CN); LIN, Junqi, BEIJING, 100085 (CN); HUANG, Yuanyuan, BEIJING, 100085 (CN)
(74) Representative: Delumeau, François Guy

(57) **Abstract**

The present invention is related to a payment verification system, method and apparatus, a computer program and a recording medium, which pertain to the field of security technologies. The system comprises a device verification server and at least one payment verification server. This invention opens the device verification server as an open platform, so that other payment verification servers can register a biometric information-based payment function on this open platform. A device verification server at a device manufacturer's side verifies a user device during the payment function provisioning stage. A payment verification server independently verifies an application during the payment function provisioning stage, and verifies a user's identity during the payment stage. As such, the stability of the payment system is ensured, and meanwhile not only the expansibility of the payment function is improved, but also the load pressure on the device verification server due to expansion of the payment function is avoided.

## Description

### TECHNICAL FIELD

The present invention is related to the field of security technologies, and more particularly, to a payment verification system, method and apparatus, a computer program and a recording medium.

### BACKGROUND

With development of security technologies, it becomes easier for users to use biometric information such as fingerprints, irises and sounds. Payment behaviors using biometric information such as fingerprints are becoming popular.

From the aspect of software, the Android system is in an insecure environment. To solve the problem that common operating systems in cell phones are vulnerable to attack, device manufacturers divide cell phones into Trusted Execution Environment TEE and Rich Execution Environment REE at the hardware level. The Android system is stored in the REE in Android cell phones. Sensitive data is stored and processed in the TEE. By using this technology, key data is protected at the hardware level. For example, storage of fingerprint information and recognition of fingerprint images are performed in the TEE.

In the related art, device manufacturers need to do the following three things to ensure identity verification of a party making a payment request: verifying that the request is sent from an authentic and trusted device; verifying that the request is sent from an authentic and trusted application; and verifying that the request is sent from an authentic and trusted user. The first two verification processes allow the provisioning of a payment function, and the last verification process ensures that a fingerprint payment function can be used normally.

During the performance of the above verification processes, if devices and users of the payment application increase in number remarkably, the servers at the device manufacturers' side will face a huge volume of simultaneous accesses, which is a challenge for the load capacity of the servers.

### SUMMARY

Accordingly, the present invention provides a payment verification system, method and apparatus, a computer program and a recording medium.

According to a first aspect of embodiments of the present invention, there is provided a payment verification system, the system comprising a device verification server and at least one payment verification server, wherein: the device verification server is configured to have a biometric information-based payment function registered thereon for the payment verification server; the device verification server is also configured to, when a user device applies for provisioning of the payment function, verify the user device; the payment verification server is configured to, when the user device applies for the provisioning of the payment function, verify a payment application operating on the user device if the verification of the user device by the device verification server is successful, and provision the payment function for the user device if the verification of the payment application is successful; and the payment verification server is also configured to, upon receiving a payment request from the user device, verify the payment request.

In a first possible embodiment of the first aspect, the device verification server is configured to: store a device public key of the user device; upon receiving a first payment function provisioning request from the user device, verify first signature information carried by the first payment function provisioning request according to the device public key of the user device; and when the verification of the first signature information is successful, send a verification success message to the payment verification server, wherein the first signature information is obtained by signing specific content by the user device with a device private key of the user device.

In a second possible embodiment of the first aspect, the payment verification server is configured to: receive an application public key uploaded by the user device; and upon receiving the verification success message sent by the device verification server, store the application public key of the user device; the payment verification server is configured to: receive a second payment function provisioning request uploaded by the user device and carrying a user public key and second signature information; verify the second signature information based on the application public key of the user device; and when the verification of the second signature information is successful, store the user public key of the user device, wherein the second signature information is obtained by signing specific content by the user device with an application private key of the user device.

In a third possible embodiment of the first aspect, the payment verification server is configured to: upon receiving a payment request carrying third signature information, verify the third signature information based on the user public key of the user device; and when the verification of the third signature information is successful, execute the payment request.

In a fourth possible embodiment of the first aspect, the system further comprises a payment server configured to perform signaling transmission between the user device and the payment verification server.

According to a second aspect of the embodiments of the present invention, there is provided a payment verification method applied to the above payment verification system, the method comprising: registering on the device verification server the biometric information-based payment function for the payment verification server; verifying by the device verification server the user device when the user device applies for the provisioning of the payment function; when the user device applies for the provisioning of the payment function, verifying by the payment verification server a payment application operating on the user device if the verification of the user device by the device verification server is successful, and provisioning by the payment verification server the payment function for the user device if the verification of the payment application is successful; and upon receiving the payment request from the user device, verifying the payment request by the payment verification server.

In a first possible embodiment of the second aspect, verifying by the device verification server the user device when the user device applies for the provisioning of the payment function comprises: storing by the device verification server a device public key of the user device; upon receiving a first payment function provisioning request from the user device, verifying by the device verification server first signature information carried by the first payment function provisioning request according to the device public key of the user device; and when the verification of the first signature information is successful, sending by the device verification server a verification success message to the payment verification server, wherein the first signature information is obtained by signing specific content by the user device with a device private key of the user device.

In a second possible embodiment of the second aspect, when the user device applies for the provisioning of the payment function, verifying by the payment verification server a payment application operating on the user device if the verification of the user device by the device verification server is successful, and provisioning by the payment verification server the payment function for the user device if the verification of the payment application is successful comprises:
receiving by the payment verification server an application public key uploaded by the user device; and upon receiving the verification success message sent by the device verification server, storing by the payment verification server the application public key of the user device;
receiving by the payment verification server a second payment function provisioning request uploaded by the user device and carrying a user public key and second signature information; verifying by the payment verification server the second signature information based on the application public key of the user device; and when the verification of the second signature information is successful, storing by the payment verification server the user public key of the user device, wherein the second signature information is obtained by signing specific content by the user device with an application private key of the user device.

In a third possible embodiment of the second aspect, upon receiving the payment request from the user device, verifying the payment request by the payment verification server comprises: upon receiving a payment request containing third signature information, verifying by the payment verification server the third signature information based on the user public key of the user device; and when the verification of the third signature information is successful, executing by the payment verification server the payment request.

In a fourth possible embodiment of the second aspect, the payment request is transmitted between the user device and the payment verification server by a payment server.

According to a third aspect of the embodiments of the present invention, there is provided a payment verification method, comprising:
registering a biometric information-based payment function on a device verification server;
after the registration of the payment function is successful, receiving an application public key uploaded by a user device, and upon receiving a verification success message sent by the device verification server, storing the application public key of the user device;
upon receiving a second payment function provisioning request uploaded by the user device and carrying a user public key and second signature information, verifying the second signature information based on the application public key of the user device; and when the verification of the second signature information is successful, storing the user public key of the user device, wherein the second signature information is obtained by signing specific content by the user device with an application private key of the user device;
upon receiving a payment request carrying third signature information, verifying the third signature information based on the user public key of the user device; and when the verification of the third signature information is successful, executing the payment request, wherein the third signature information is obtained by signing specific content by the user device with a user private key of the user device.

According to a fourth aspect of the embodiments of the present invention, there is provided a payment verification apparatus, comprising:
a registering module configured to register a biometric information-based payment function on a device verification server;
a receiving module configured to, after the registration of the payment function is successful, receive an application public key uploaded by a user device;
a storing module configured to, when a verification success message sent by the device verification server is received, store the application public key of the user device;
a verifying module configured to: when a second payment function provisioning request uploaded by the user device and carrying a user public key and second signature information is received, verify the second signature information based on the application public key of the user device; and when the verification of the second signature information is successful, trigger the storing module to store the user public key of the user device, wherein the second signature information is obtained by signing specific content by the user device with an application private key of the user device;
wherein the verifying module is also configured to: when a payment request containing third signature information is received, verify the third signature information based on the user public key of the user device; and
a processing module configured to: when the verification of the third signature information is successful, execute the payment request, wherein the third signature information is obtained by signing specific content by the user device with a user private key of the user device.

According to a fifth aspect of the embodiments of the present invention, there is provided a payment verification apparatus, comprising:
a processor; and
a memory storing instructions executable by the processor,
wherein the processor is configured, upon executing the instructions, to:
register a biometric information-based payment function on a device verification server;
after the registration of the payment function is successful, receive an application public key uploaded by a user device, and upon receiving a verification success message sent by the device verification server, store the application public key of the user device;
upon receiving a second payment function provisioning request uploaded by the user device and carrying a user public key and second signature information, verify the second signature information based on the application public key of the user device; and when the verification of the second signature information is successful, store the user public key of the user device, wherein the second signature information is obtained by signing specific content by the user device with an application private key of the user device;
upon receiving a payment request carrying third signature information, verify the third signature information based on the user public key of the user device; and when the verification of the third signature information is successful, execute the payment request, wherein the third signature information is obtained by signing specific content by the user device with a user private key of the user device.

In one particular embodiment, the steps of the payment verification method are determined by computer program instructions.

Consequently, according to a sixth aspect, the invention is also directed to a computer program for executing the steps of a payment verification method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the embodiments of this invention have the following advantageous effects:

This invention opens the device verification server as an open platform, so that other payment verification servers can register a biometric information-based payment function on this open platform. A device verification server at a device manufacturer's side verifies a user device during the payment function provisioning stage. A payment verification server independently verifies an application during the payment function provisioning stage, and verifies a user's identity during the payment stage. As such, the expansibility of the payment function and the capability for supporting third party applications are improved, the load pressure on the device verification server due to expansion of the payment function is avoided and the problem of increased cost and the security problem due to increase in the number of Trusted Applications (TAs) is solved, while the stability of the payment system is ensured.

It should be understood that both the foregoing general description and the following detailed description are illustrative and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a diagram showing an architecture of a payment verification system according to an example embodiment;
Fig. 2 is a flow chart illustrating interactions in the architecture of the above payment verification system;
Fig. 3 is a flow chart showing a payment verification method according to an example embodiment;
Fig. 4 is a block diagram of a payment verification apparatus according to an example embodiment;
Fig. 5 is a block diagram of a payment verification apparatus 500 according to an example embodiment.

### DETAILED DESCRIPTION

To make the objectives, technical solutions and advantages of this invention clearer, certain embodiments of this invention will be described in detail in the following with reference to the accompanying drawings.

Reference will now be made in detail to certain embodiments, examples of which are illustrated in the accompanying drawings. The following description refers to the accompanying drawings in which the same numbers in different drawings represent the same or similar elements unless otherwise presented. The embodiments set forth in the following description of illustrative embodiments do not represent all embodiments consistent with the invention. Instead, they are merely examples of apparatuses and methods consistent with aspects related to the invention as recited in the appended claims.

TEE refers to a trusted or "safe" execution environment, and is also called "Secure World".

REE refers to a potentially unsafe, rich execution environment, and is also called "Normal World or Non-Secure World".

Trusted Operating System OS operates in the TEE, and operates in parallel with the Android system in a cell phone chip in an Android cell phone.

Client Application CA refers to an application operating in the REE, and refers to the Android software itself when it operates in an Android cell phone.

System Trusted Application TA needs signature using a system key, and is pre-installed in a corresponding directory of a cell phone before the cell phone leaves a factory.

Service Provider Trusted Application SP TA refers to a TA developed by a third party that needs signature using an SP key (service provider key) and may be installed in a corresponding directory of a cell phone by downloading afterwards.

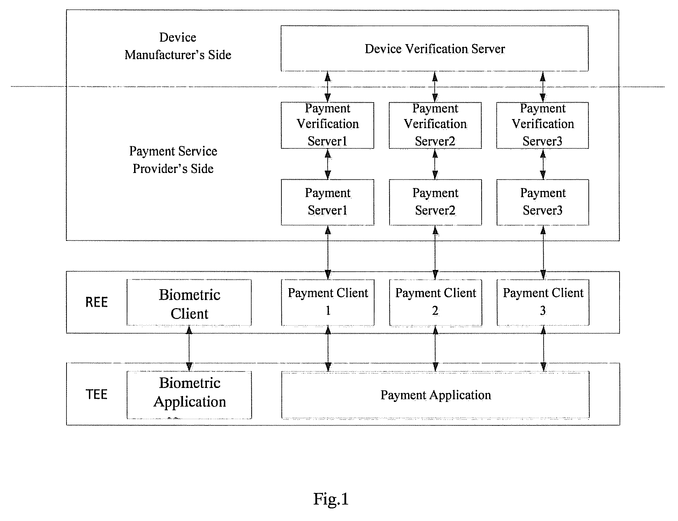

Fig. 1 is a diagram showing an architecture of a payment verification system according to an example embodiment. As shown in Fig. 1, the system comprises a device verification server at a device manufacturer's side and at least one payment verification server at a payment service provider's side.

The device verification server is configured to have a biometric information-based payment function registered thereon for the payment verification server; and the device verification server is also configured to, when a user device applies for provisioning of the payment function, verify the user device.

The biometric information may be fingerprint information, iris information, facial characteristics or voice characteristics, and may be used in various verification manners such as fingerprint recognition, iris recognition, human face recognition and human voice recognition etc.

The payment verification server is configured to, when the user device applies for the provisioning of the payment function, verify a payment application operating on the user device if the verification of the user device by the device verification server is successful, and provision the payment function for the user device if the verification of the payment application is successful. The payment verification server is also configured to, upon receiving a payment request from the user device, verify the payment request.

One payment verification server may provide verification services to at least one payment application, which will not be specifically described in the embodiments of this invention. The user device may send to a payment server any of a payment request or a payment function provisioning request corresponding to a payment application, and then the request is sent by the payment server to the payment verification server for verification. Of course, the payment verification server and the payment server may be two functional blocks in the same physical device or in different physical devices, which will not be specifically described in the embodiments of this invention.

At the user device's side, the user device may operate a biometric client and a payment client etc. in the REE, operate a biometric TA corresponding to the biometric client at the TEE side, and operate corresponding payment TAs for multiple payment clients so as to perform verification processes with the payment service provider side via payment applications during the payment process. Of course, the user device may be provided with a sensor for collecting a user's biometric information or the like, which will not be specifically described in the embodiments of this invention.

This invention opens the device verification server as an open platform, so that other payment verification servers can register a biometric information-based payment function on this open platform. A device verification server at a device manufacturer's side verifies a user device during the payment function provisioning stage. A payment verification server independently verifies an application during the payment function provisioning stage, and verifies a user's identity during the payment stage. As such, the expansibility of the payment function and the capability for supporting third party applications are improved, the load pressure on the device verification server due to expansion of the payment function is avoided and the problem of increased cost and the security problem due to increase in the number of TAs is solved, while the stability of the payment system is ensured.

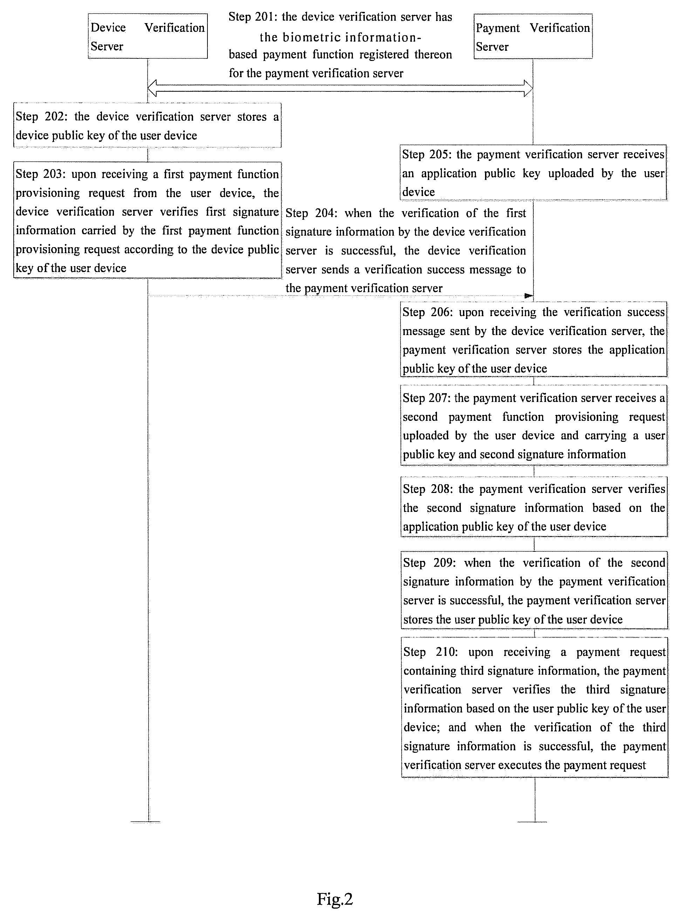

Fig. 2 is a flow chart illustrating interactions in the architecture of the above payment verification system. Referring to Fig. 2, the interaction flow specifically comprises the following steps.

In Step 201, the device verification server has the biological recognition information-based payment function registered thereon for the payment verification server.

A payment application may be registered by an application operator on a device verification server, which may provision the biological recognition information-based payment function, so that a third party's application registered on the device verification server can use the payment function for transactions.

In Step 202, the device verification server stores a device public key of the user device.

The user device has a public key and a private key. The device public key of the user device may be stored in the device verification server before the user device leaves the factory. This pair of keys is closely and uniquely related to the user device and can be used to verify the authenticity of the user device. After the user device leaves the factory, an application key pair and a user key pair may be generated based on a preset algorithm. The application key pair may comprise an application public key and an application private key. The user key pair may comprise a user public key and a user private key. These two pairs of keys may be used to verify the validity of the user's data.

In Step 203, upon receiving a first payment function provisioning request from the user device, the device verification server verifies first signature information carried by the first payment function provisioning request according to the device public key of the user device, wherein the first signature information is obtained by signing specific content by the user device with a device private key of the user device.

The first payment function provisioning request may be sent by the user via a payment application operating on the user device. When the user wants to make a payment using the payment application, the payment function should be activated.

In Step 204, when the verification of the first signature information by the device verification server is successful, the device verification server sends a verification success message to the payment verification server.

The device verification server may decrypt the first signature information using the device private key of the user device. If the decryption of the first signature information is successful, the verification of the first signature information is successful, and it can be determined that the first payment function provisioning request is indeed sent by a legitimate user device. In this case, the payment verification server may be authorized to store the application public key of the user device.

In Step 205, the payment verification server receives an application public key uploaded by the user device.

When the user device sends the first payment function provisioning request, the first payment function provisioning request may also carry the application public key of the user device. Thus, when the payment verification server receives and forwards the first payment function provisioning request, the application public key of the user device may be extracted. Of course, the application public key of the user device may be sent after the user device sends the first payment function provisioning request, which will not be specifically described in the embodiments of this invention.

It should be noted that, in the embodiments of this invention, the specific time sequence of the steps is just described by way of example. In actual scenarios, Steps 204 and 205 may be performed according to another time sequence. For example, Step 205 may be performed before Step 204, or Steps 204 and 205 may be performed simultaneously. In other words, so long as Steps 204 and 205 are finished before Step 206, the embodiments of this invention will not specifically define the sequence.

In Step 206, upon receiving the verification success message sent by the device verification server, the payment verification server stores the application public key of the user device.

After the verification of the user device by the device verification server is successful, the payment verification server may be informed to store the application public key of the user device, so that the user device may be verified in the subsequent payment process.

As shown by the above steps, through preliminary verification of the user device, the device verification server stores the application public key of the user device in the payment verification server, so that exchange of keys between the device verification server at the device manufacturer's side and the payment verification server at the payment service provider's side is realized, thereby ensuring communication security between the two servers.

In Step 207, the payment verification server receives a second payment function provisioning request uploaded by the user device and carrying a user public key and second signature information, wherein the second signature information is obtained by signing specific content by the user device with an application private key of the user device.

The second payment function provisioning request may be sent after the user device sends the first payment function provisioning request, and does not need to be sent to the device verification server. The second payment function provisioning request is used to apply to the payment verification server for provisioning of the payment function for the user device.

In Step 208, the payment verification server verifies the second signature information based on the application public key of the user device.

In Step 209, when the verification of the second signature information by the payment verification server is successful, the payment verification server stores the user public key of the user device.

After the above verification process, the payment verification server may store the user public key of the user device, so that the subsequent payment process may be verified using the user public key of the user device.

In Step 210, upon receiving a payment request carrying third signature information, the payment verification server verifies the third signature information based on the user public key of the user device; and when the verification of the third signature information is successful, the payment verification server executes the payment request.

Through the above process, the device verification server at the device manufacturer's side does not need to be engaged in the payment process. Instead, the payment client on the user device sends a payment request; after verification of the biological recognition information is successful, the user device signs specific content using a user private key. After the payment verification server at the payment service provider's side receives the payment request, verification of the third signature information is performed based on the user public key. If verification of the third signature information is successful, it is believed that the user's identity has been approved, and the payment request can be executed to complete the payment process.

This invention opens the device verification server as an open platform, so that other payment verification servers can register a biometric information-based payment function on this open platform. A device verification server at a device manufacturer's side verifies a user device during the payment function provisioning stage. A payment verification server independently verifies an application during the payment function provisioning stage, and verifies a user's identity during the payment stage. As such, the expansibility of the payment function and the capability for supporting third party applications are improved, the load pressure on the device verification server due to expansion of the payment function is avoided, and the problem of increased cost and the security problem due to increase in the number of TAs is solved, while the stability of the payment system is ensured. The system architecture provided by this invention effectively standardizes the fingerprint payment service procedure, expands at the service provider the support of payment applications by the user device such as cell phones, and effectively reduces the pressure on the background servers of device manufacturers. The device verification server at the uppermost layer in the system architecture can guarantee the service stability, improves the concurrent capability and ensures the stability of interactions among servers.

Alternative embodiments can be made from any combination of the above optional technical solutions, and the descriptions thereof are omitted here.

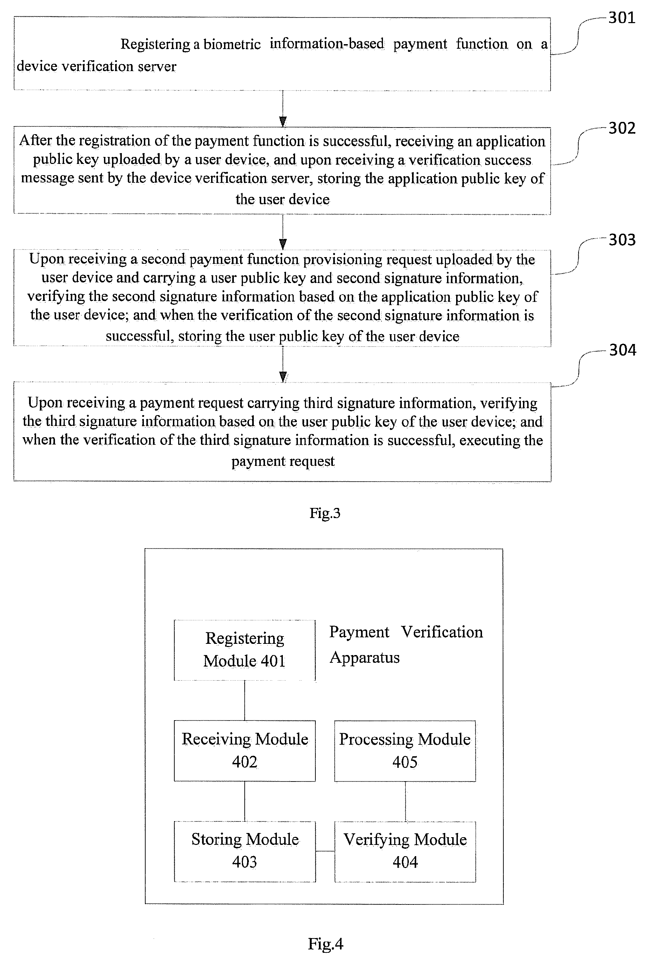

Fig. 3 is a flow chart illustrating a payment verification method according to an example embodiment. As shown in Fig. 3, the method comprises:
Step 301: registering a biometric information-based payment function on a device verification server.
Step 302: after the registration of the payment function is successful, receiving an application public key uploaded by a user device, and upon receiving a verification success message sent by the device verification server, storing the application public key of the user device.
Step 303: upon receiving a second payment function provisioning request uploaded by the user device and carrying a user public key and second signature information, verifying the second signature information based on the application public key of the user device; and when the verification of the second signature information is successful, storing the user public key of the user device, wherein the second signature information is obtained by signing specific content by the user device with an application private key of the user device.
Step 304: upon receiving a payment request carrying third signature information, verifying the third signature information based on the user public key of the user device; and when the verification of the third signature information is successful, executing the payment request, wherein the third signature information is obtained by signing specific content by the user device with a user private key of the user device.

It should be noted that, in the embodiments of this invention, the specific content may be transaction information, user information or the like, which will not be specifically defined in the embodiments of this invention. The specific content used as the signature object for each time may be the same or may vary according to different procedures and different algorithms, which will not be specifically described in the embodiments of this invention.

Fig. 4 is a block diagram of a payment verification apparatus according to an example embodiment. As shown in Fig. 4, the apparatus comprises: a registering module 401, a receiving module 402, a storing module 403, a verifying module 404 and a processing module 405.

The registering module 401 is configured to register a biometric information-based payment function on a device verification server.

The receiving module 402 is configured to, after the registration of the payment function is successful, receive an application public key uploaded by a user device.

The storing module 403 is configured to, when a verification success message sent by the device verification server is received, store the application public key of the user device.

The verifying module 404 is configured to: when a second payment function provisioning request uploaded by the user device and carrying a user public key and second signature information is received, verify the second signature information based on the application public key of the user device; and when the verification of the second signature information is successful, trigger the storing module to store the user public key of the user device, wherein the second signature information is obtained by signing specific content by the user device with an application private key of the user device.

The verifying module 404 is also configured to: when a payment request carrying third signature information is received, verify the third signature information based on the user public key of the user device.

The processing module 405 is configured to: when the verification of the third signature information is successful, execute the payment request, wherein the third signature information is obtained by signing specific content by the user device with a user private key of the user device.

With respect to the apparatus in the above embodiments, the specific manners for performing operations for individual modules therein have been described in detail in the embodiments regarding the steps of the method, and will not be elaborated further herein.

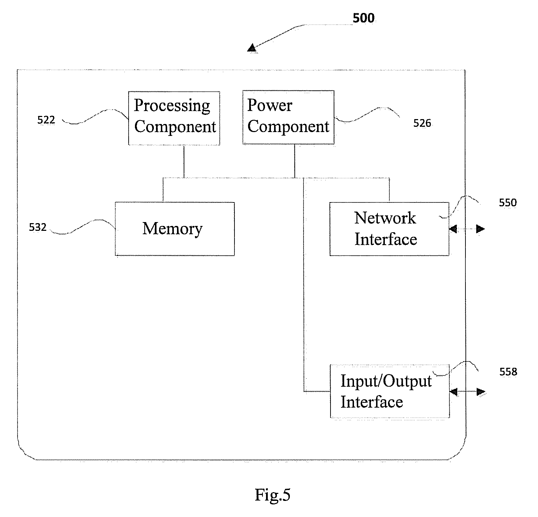

Fig. 5 is a block diagram of a payment verification apparatus 500 according to an example embodiment. For example, the apparatus 500 may be provided as a server. As shown in Fig. 5, the apparatus 500 comprises: a processing component 522 which further comprises one or more processors; and memory resources represented by a memory 532 for storing instructions executable by the processing component 522, such as applications. The applications stored in the memory 532 may comprise one or more modules, each module corresponding to a group of instructions. In addition, the processing component 522 is configured to execute instructions to perform the above payment verification method.

The apparatus 500 may further comprise a power component 526 configured to perform power management for the apparatus 500, a wired or wireless network interface 550 configured to connect the apparatus 500 to a network, and an input/output I/O interface 558. The apparatus 500 may operate an operating system stored in the memory 532, such as Windows Server^{™}, Mac OS X^{™}, Unix^{™}, Linux^{™}, FreeBSD^{™} or the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as illustrative only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A payment verification system, **characterized by** comprising a device verification server and at least one payment verification server, wherein:
the device verification server is configured to have a biometric information-based payment function registered thereon for the payment verification server;
the device verification server is also configured to, when a user device applies for provisioning of the payment function, verify the user device;
the payment verification server is configured to, when the user device applies for the provisioning of the payment function, verify a payment application operating on the user device if the verification of the user device by the device verification server is successful, and provision the payment function for the user device if the verification of the payment application is successful; and
the payment verification server is also configured to, upon receiving a payment request from the user device, verify the payment request.

2. The system according to claim 1, **characterized in that** the device verification server is configured to:
store a device public key of the user device;
upon receiving a first payment function provisioning request from the user device, verify first signature information carried by the first payment function provisioning request according to the device public key of the user device; and
when the verification of the first signature information is successful, send a verification success message to the payment verification server, wherein the first signature information is obtained by signing specific content, by the user device, with a device private key of the user device.

3. The system according to claim 1, **characterized in that**
the payment verification server is configured to: receive an application public key uploaded by the user device; and upon receiving the verification success message sent by the device verification server, store the application public key of the user device;
the payment verification server is configured to: receive a second payment function provisioning request uploaded by the user device and carrying a user public key and second signature information; verify the second signature information based on the application public key of the user device; and when the verification of the second signature information is successful, store the user public key of the user device, wherein the second signature information is obtained by signing specific content, by the user device, with an application private key of the user device.

4. The system according to claim 1, **characterized in that** the payment verification server is configured to: upon receiving a payment request carrying third signature information, verify the third signature information based on the user public key of the user device; and when the verification of the third signature information is successful, execute the payment request.

5. The system according to claim 1, **characterized in that** the system further comprises a payment server configured to perform signaling transmission between the user device and the payment verification server.

6. A payment verification method applied to the payment verification system according to claim 1, the method **characterized by** comprising:
registering, on the device verification server, the biometric information-based payment function for the payment verification server;
verifying, by the device verification server, the user device when the user device applies for the provisioning of the payment function;
when the user device applies for the provisioning of the payment function, verifying by the payment verification server the payment application operating on the user device if the verification of the user device by the device verification server is successful, and provisioning by the payment verification server the payment function for the user device if the verification of the payment application is successful; and
upon receiving the payment request from the user device, verifying the payment request by the payment verification server.

7. The method according to claim 6, **characterized in that** verifying by the device verification server the user device when the user device applies for the provisioning of the payment function comprises:
storing by the device verification server a device public key of the user device; upon receiving a first payment function provisioning request from the user device, verifying by the device verification server first signature information carried by the first payment function provisioning request according to the device public key of the user device; and when the verification of the first signature information is successful, sending by the device verification server a verification success message to the payment verification server, wherein the first signature information is obtained by signing specific content by the user device with a device private key of the user device.

8. The method according to claim 6, **characterized in that** when the user device applies for the provisioning of the payment function, verifying by the payment verification server the payment application operating on the user device if the verification of the user device by the device verification server is successful, and provisioning by the payment verification server the payment function for the user device if the verification of the payment application is successful comprises:
receiving by the payment verification server an application public key uploaded by the user device; and upon receiving the verification success message sent by the device verification server, storing by the payment verification server the application public key of the user device;
receiving by the payment verification server a second payment function provisioning request uploaded by the user device and carrying a user public key and second signature information; verifying by the payment verification server the second signature information based on the application public key of the user device; and when the verification of the second signature information is successful, storing by the payment verification server the user public key of the user device, wherein the second signature information is obtained by signing specific content by the user device with an application private key of the user device.

9. The method according to claim 6, **characterized in that** upon receiving the payment request from the user device, verifying the payment request by the payment verification server comprises:
upon receiving a payment request carrying third signature information, verifying by the payment verification server the third signature information based on the user public key of the user device; and when the verification of the third signature information is successful, executing by the payment verification server the payment request.

10. The method according to claim 6, **characterized in that** the payment request is transmitted between the user device and the payment verification server by a payment server.

11. A payment verification method, **characterized by** comprising:
registering a biometric information-based payment function on a device verification server;
after the registration of the payment function is successful, receiving an application public key uploaded by a user device, and upon receiving a verification success message sent by the device verification server, storing the application public key of the user device;
upon receiving a second payment function provisioning request uploaded by the user device and carrying a user public key and second signature information, verifying the second signature information based on the application public key of the user device; and when the verification of the second signature information is successful, storing the user public key of the user device, wherein the second signature information is obtained by signing specific content by the user device with an application private key of the user device;
upon receiving a payment request carrying third signature information, verifying the third signature information based on the user public key of the user device; and when the verification of the third signature information is successful, executing the payment request, wherein the third signature information is obtained by signing specific content by the user device with a user private key of the user device.

12. A payment verification apparatus, **characterized by** comprising:
a registering module configured to register a biometric information-based payment function on a device verification server;
a receiving module configured to, after the registration of the payment function is successful, receive an application public key uploaded by a user device;
a storing module configured to, when a verification success message sent by the device verification server is received, store the application public key of the user device;
a verifying module configured to: when a second payment function provisioning request uploaded by the user device and carrying a user public key and second signature information is received, verify the second signature information based on the application public key of the user device; and when the verification of the second signature information is successful, trigger the storing module to store the user public key of the user device, wherein the second signature information is obtained by signing specific content by the user device with an application private key of the user device,
wherein the verifying module is also configured to: when a payment request carrying third signature information is received, verify the third signature information based on the user public key of the user device; and
a processing module configured to: when the verification of the third signature information is successful, execute the payment request, wherein the third signature information is obtained by signing specific content by the user device with a user private key of the user device.

13. A payment verification apparatus, **characterized by** comprising:
a processor; and
a memory storing instructions executable by the processor,
wherein the processor is configured, upon executing the instructions, to perform the method of claim 11.

14. A computer program including instructions for executing the steps of a payment verification method according to any one of claims 6 to 11, when said program is executed by a computer.

15. A recording medium readable by a computer and having recorded thereon a computer program including instructions for executing the steps of a payment verification method according to any one of claims 6 to 11.
